# DEMANDE DE BREVET EUROPEEN

(11) **EP 4 576 608 A1**
(43) Date de publication de la demande: **25.06.2025**
(21) Numéro de dépôt: 24222483.0
(22) Date de dépôt: 20.12.2024
(51) Int. Cl.: H04B 10/118, H04B 10/70

(54) **PROCEDE CENTRALISE D'APPAIRAGE DE CLE CRYPTOGRAPHIQUE QUANTIQUE PAR SATELLITE**

(30) Priorité: 21.12.2023 FR 2314794
(71) Demandeur: THALES, 92190 Meudon (FR)
(72) Inventeur: ARNAL, Fabrice, 31270 CUGNAUX (FR); DE FORGES DE PARNY, Laurent, 31170 TOURNEFEUILLE (FR)
(74) Mandataire: Atout PI Laplace

(57) **Abrégé**

L'invention concerne un procédé centralisé d'appairage de clé cryptographique quantique par satellite pour des stations au sol (A, B), comprenant : une étape de distribution quantique de clés (1), dans laquelle, pour chaque station (A, B), une clé cryptographique (K_{A}, K_{B}) est partagée par communication quantique entre la station (A, B) et un satellite (SAT A, SAT B) ; une étape de stockage centralisé de clés (3), dans laquelle chaque clé (K_{A}, K_{B}) est d'abord transmise de manière cryptée du satellite (SAT A, SAT B) vers une unité centrale terrestre de gestion de clés (UC), puis stockée par cette unité (UC) ; et une étape d'appairage (6) entre une première (A) et une deuxième (B) desdites stations, dans laquelle, sur réception d'une requête (5) de communication, l'unité (UC) transmet de manière cryptée la clé (K_{B}) liée à la deuxième station (B) vers la première station (A).

## Description

L'invention concerne un procédé centralisé d'appairage de clé cryptographique quantique par satellite pour une pluralité de stations au sol. L'invention concerne en outre un système centralisé d'appairage de clé cryptographique quantique par satellite pour une pluralité de stations au sol, utilisant un procédé selon l'invention.

Il existe un intérêt pour permettre l'échange d'informations sensibles par un canal de communication ouvert, tel que par exemple un canal de communication sans fil, tout en préservant leur caractère secret. Par canal de communication ouvert ou liaison ouverte, on entend un canal de communication ou une liaison dont le contenu peut être intercepté par un tiers sans possibilité pour l'émetteur et le récepteur de le détecter. Un tel problème est typiquement représenté par une situation dans laquelle deux personnes, Alice et Bob, souhaitent échanger des informations sensibles à l'abri des regards indiscrets, au travers d'un canal de communication ouvert authentifié (par exemple internet). Pour cela, il existe des techniques cryptographiques par lesquelles Alice et Bob chiffrent leurs messages. On connaît des techniques cryptographiques symétriques utilisant uniquement une clé privée partagée (appelée aussi « secret partagé ») et des techniques cryptographiques asymétriques reposant sur une combinaison de clés publiques et privées. Le principe d'une technique cryptographique symétrique est succinctement détaillé ci-après. Appelons Eve, la personne qui souhaite intercepter ces messages. Alice, à l'aide d'une fonction cryptographique et d'une clé privée partagée avec Bob, chiffre ses messages avant de les envoyer à Bob au travers d'un canal ouvert. Lorsque Bob reçoit les messages chiffrés, il les déchiffre à l'aide de la même fonction cryptographique et de la clé privée partagée, pour pouvoir accéder aux informations en clair. Eve, ne possédant pas la clé, ne pourra pas déchiffrer le message.

Dans la mise en oeuvre des techniques cryptographiques symétriques, une question cruciale porte sur la préservation du secret, notamment sur les façons de partager la clé secrète de manière sécurisée entre Alice et Bob, à l'abri des regards indiscrets.

Une nouvelle solution a été imaginée à la fin du XXème siècle, proposant d'utiliser des communications quantiques pour partager de manière sûre une clé commune entre Alice et Bob. Une communication quantique consiste à établir une liaison quantique entre un émetteur et un récepteur pour un échange d'informations. La liaison quantique comprend notamment une liaison optique transmettant une suite de photons. Un qubit (ou qbit) est l'information quantique transportée par un photon. Cette information est, par exemple, encodée dans l'état de polarisation du photon.

La distribution quantique de clé ou procédé QKD (pour l'anglais « Quantum Key Distribution ») désigne un protocole cryptographique visant à établir une clé secrète partagée entre deux participants, Alice et Bob, en utilisant une communication quantique. Grâce aux propriétés quantiques, notamment celles dues au théorème de non-clonage quantique, toute tentative d'attaque de la communication, comme une tentative d'écoute par un tiers Eve, peut être détectée de façon certaine par Alice et Bob, ce qui leur permet de rapidement invalider la clé. De ce fait, le procédé QKD permet un établissement sécurisé de clé cryptographique symétrique.

Le protocole de préparation et mesure (ou P&M pour « Prepare & Measure » en anglais) est un exemple de procédé QKD connu. Dans ce protocole P&M, l'émetteur Alice encode un bit classique (0 ou 1) dans un signal optique individuel, notamment un photon, avant de le transmettre sous forme de qubit au récepteur Bob. Bob réalise un ensemble de mesures spécifiques sur chacun des signaux optiques individuels, tels que des photons, émis par Alice en vue de retrouver les bits encodés. Un exemple de protocole P&M est le protocole BB84 dans lequel la polarisation d'un photon individuel permet d'encoder un bit. Le protocole BB84 est notamment décrit dans la publication « Quantum cryptography: Public key distribution and coin tossing », Charles H. Bennett et Gilles Brassard, Theoretical Computer Science, vol. 560, 1984, p. 7-11 (DOI:10.1016/j.tcs.2014.05.025).

Lorsque Alice et Bob sont des utilisateurs au sol, la liaison quantique peut être implémentée via un canal de communication optique porté par de la fibre optique. Cependant, dans la fibre optique, les signaux optiques sont progressivement atténués, ce qui ne permet une liaison quantique qu'en deçà d'une distance limite, typiquement autour de 100km. Pour une distribution quantique de clé sur une plus longue distance, il est connu de propager la clé par l'intermédiaire d'un ou plusieurs noeuds dits "de confiance" (ou "trusted nodes" en anglais) placés à intervalles réguliers (typiquement tous les 100 kilomètres). Un tel noeud de confiance, positionné entre Alice et Bob, permet d'allonger la portée d'établissement de clé par communication quantique. A cet effet, le noeud de confiance manipule en clair une clé K_{A} partagée par communication quantique avec Alice et une clé K_{B} partagée par communication quantique avec Bob. De ce fait, le noeud de confiance doit être sécurisé avec un très fort niveau de sécurité. Ensuite, le noeud de confiance s'appuie notamment sur la technique de chiffrement par masque jetable (ou OTP pour « One Time Pad cryptography » en anglais) pour transmettre à Bob la clé K_{A} préalablement partagée avec Alice. Pour cela, le noeud de confiance applique une fonction XOR, c'est-à-dire une fonction « OU exclusif », entre la clé K_{A} partagée avec Alice et la clé K_{B} partagée avec Bob, pour obtenir une séquence de parité.KA⊕KB.La fonction XOR entre deux éléments est représentée par le symbole ⊕. La séquence de parité KA⊕KB est transmise à Bob par un canal ouvert authentifié. Bob, qui détient la clé K_{B}, pourra de nouveau effectuer une fonction XOR entre la séquence reçue du noeud de confiance et sa clé K_{B} pour recouvrer la clé K_{A} d'Alice. Ceci repose sur la propriété de la fonction XOR selon laquelle KA⊕KB⊕KB = KA⊕ (KB⊕KB) = KA, mais aussi sur la technique de chiffrement par masque jetable qui garantit qu'il n'est pas possible de remonter à l'une des clés K_{A}, K_{B} par la seule connaissance de la séquence KA⊕KB. Cependant, une connexion via fibre optique entre deux utilisateurs séparés par un océan peut être désavantageuse en termes de garantie de sécurité car nécessitant un grand nombre de noeuds de confiance.

Il est connu de procéder aux échanges de signaux optiques en champ libre, c'est-à-dire en particulier depuis l'espace, par l'intermédiaire d'un satellite et d'une station sol dotée d'un télescope. La liaison quantique est alors mise en oeuvre par une source laser, notamment dans le domaine de l'infrarouge ou du proche infrarouge. En traversant le vide spatial et l'atmosphère terrestre, le signal laser implémentant la communication quantique subit une atténuation moindre, du moins sur de longues distances, par rapport à une propagation dans une fibre optique. La publication « Progress in satellite Quantum Key Distribution », Robert Bedington, Juan Miguel Arrazola, Alexander Ling, npj Quantum Information 3, Article number: 30 (2017) (DOI:10.1038/s41534-017-0031-5) décrit des procédés QKD par satellite.

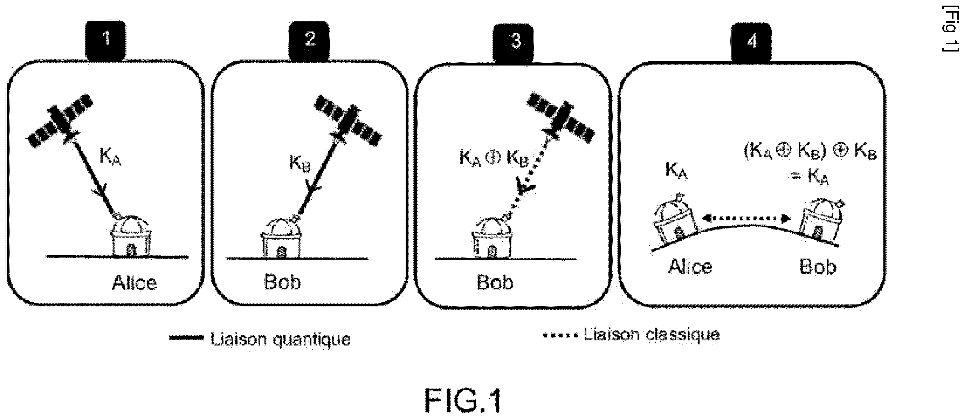

La figure 1 illustre un exemple classique de distribution quantique de clé par satellite. Dans une première étape, le satellite permet l'établissement d'une clé partagée K_{A} avec la station sol Alice par communication quantique. Après s'être déplacé sur son orbite, dans une deuxième étape, le satellite permet l'établissement d'une seconde clé partagée K_{B} avec la station sol Bob par communication quantique. Puis, lors d'une troisième étape, le satellite transmet à Bob la séquence de parité KA⊕KB issue d'une fonction XOR appliquée sur les clés K_{A}, K_{B}. La transmission de la séquence de parité KA⊕KB s'effectue sur un canal de communication ouvert, en particulier non quantique, par exemple par liaison optique ou radiofréquence RF. Dans une quatrième étape, Bob peut alors extraire la clé K_{A} d'Alice en effectuant une fonction XOR entre sa propre clé K_{B} et la séquence de parité KA⊕KB que le satellite lui a transmis. Ainsi, la clé K_{A} est finalement partagée entre Alice et Bob. Ils peuvent alors utiliser cette clé K_{A} pour chiffrer des communications entre eux sur un canal de communication ouvert. En se déplaçant relativement à Alice et relativement à Bob, le satellite agit comme un noeud de confiance spatial mobile. Un partage de clé entre Alice et Bob peut donc être obtenu quelle que soit la distance qui les sépare, sous réserve que le même satellite survole les deux stations.

Les signaux quantiques utilisés étant par nature très faibles en intensité, l'utilisation d'un satellite à orbite basse est préférée à celle d'un satellite géostationnaire, qui a une orbite plus haute. Il en résulte que la visibilité temporelle est plus réduite pour une station donnée. En outre, le flux laser, support de la communication quantique, reste très sensible aux conditions météorologiques et environnementales entre la station au sol et le satellite. Par exemple, des nuages ou des turbulences atmosphériques peuvent perturber, voire bloquer, le signal optique. Pour chaque station au sol, le satellite doit donc attendre que les conditions soient favorables pour un établissement de clé par communication quantique. Ainsi, le délai pour la mise en oeuvre d'une demande d'appairage entre Alice et Bob peut être conséquent, car le satellite doit se déplacer d'une station à l'autre et les conditions météorologiques doivent être favorables pour chacune d'entre elles au moment du passage du satellite.

On connaît l'utilisation d'une constellation de satellites par laquelle la clé est propagée depuis Alice vers Bob. Cependant, une telle solution est relativement complexe et coûteuse. En outre, en fonction de la géométrie de la constellation, il n'est pas toujours possible d'établir une liaison inter satellitaire (ou ISL pour « Inter Satellite Link » en anglais) entre deux satellites quelconques de la constellation. Une clé pourrait être stockée longtemps à bord d'un satellite, en attendant que celui-ci dispose d'un créneau de visibilité avec un satellite destinataire, avant de pouvoir être effacée. Or, les capacités de stockage d'un satellite sont limitées.

Il est donc recherché une solution pour réduire le délai entre une demande d'appairage entre deux stations au sol et son exécution, dans un procédé de distribution quantique de clé cryptographique par satellite.

A cet effet, l'invention concerne un procédé centralisé d'appairage de clé cryptographique quantique par satellite pour une pluralité de stations au sol, procédé comprenant dans cet ordre :
- une étape de distribution quantique de clés, dans laquelle, pour chaque station au sol, au moins une clé cryptographique respective, dite « clé liée à la station au sol », est partagée par communication quantique entre la station au sol et un satellite, dit « satellite d'établissement de clé » ;
- une étape de stockage centralisé de clés, dans laquelle chaque clé liée à une station au sol est d'abord transmise de manière chiffrée du satellite d'établissement de clé vers une unité centrale terrestre de gestion de clés, puis stockée par cette unité centrale terrestre de gestion de clés ; et
- une étape d'appairage entre une première et une deuxième desdites stations au sol, dans laquelle, sur réception d'une requête de communication entre la première station au sol et la deuxième station au sol, l'unité centrale terrestre de gestion de clés transmet de manière chiffrée la clé liée à la deuxième station au sol vers la première station au sol.

Ainsi, un stock sécurisé de clés cryptographiques est d'abord constitué pour les stations au sol, puis ces clés sont distribuées sur requête pour l'établissement d'une communication chiffrée entre des stations au sol. Grâce à ces étapes de distribution et de stockage centralisé de clés, les clés sont à disposition lors d'une demande ultérieure de mise en liaison entre des stations au sol. Une fois le stock de clés cryptographiques constitué, le processus d'appariement des clés cryptographiques partagées entre deux stations au sol n'est donc plus dépendant des contraintes du système satellitaire (visibilité, mission, disponibilité du canal atmosphérique, etc.). Le délai d'appairage entre deux stations au sol est alors amélioré par rapport à l'art antérieur et la distribution des paires de clés est adaptable en fonction des besoins du moment.

Selon un mode de réalisation, dans l'étape d'appairage entre la première station au sol et la deuxième station au sol, l'unité centrale terrestre de gestion de clés transmet en outre de manière chiffrée la clé liée à la première station au sol vers la deuxième station au sol.

Selon un mode de réalisation, dans l'étape d'appairage, la transmission ou les transmissions chiffrées comprennent la transmission d'une séquence de parité, résultat d'une fonction OU exclusif XOR entre la clé liée à la première station au sol et la clé liée à la deuxième station au sol.

Selon un mode de réalisation, dans l'étape de stockage centralisé de clés, chaque clé liée à une station au sol est transmise de manière chiffrée au moyen d'une clé partagée entre le satellite d'établissement de clé et l'unité centrale terrestre de gestion de clés.

Selon une variante, dans l'étape de stockage centralisé de clés, la transmission chiffrée de la clé liée à la station au sol entre le satellite d'établissement de clé et l'unité centrale terrestre de gestion de clés comprend la transmission d'une séquence de parité, résultat d'une fonction OU exclusif XOR entre la clé liée à la station au sol et la clé partagée entre le satellite d'établissement de clé et l'unité centrale terrestre de gestion de clés.

Selon une variante, le procédé comprend, avant l'étape de stockage centralisé de clés, une première étape préalable de distribution quantique de clés de satellites, dans laquelle la clé partagée entre le satellite d'établissement de clé et l'unité centrale terrestre de gestion de clés est partagée par communication quantique entre le satellite d'établissement de clé et l'unité centrale terrestre de gestion de clés.

Selon un mode de réalisation, le procédé comprend en outre, le satellite d'établissement de clé appartenant à une constellation de satellites, une sélection d'un satellite parmi la constellation de satellites en tant que satellite de d'établissement de clé à partir de conditions de communication avec la station au sol.

Selon un mode de réalisation, l'unité centrale terrestre de gestion de clés est au moins en partie comprise dans un centre de contrôle de mission du satellite d'établissement de clé ou de la constellation de satellites.

Selon un mode de réalisation, pour au moins une station au sol, plusieurs clés liées à la station au sol partagées par communication quantique sont stockées dans l'unité centrale terrestre de gestion de clés.

L'invention concerne en outre un système centralisé d'appairage de clé cryptographique quantique par satellite pour une pluralité de stations au sol, système comprenant au moins un satellite, dit « satellite d'établissement de clé », et au moins une unité centrale terrestre de gestion de clés, configurés pour mettre en oeuvre un procédé selon l'invention.

D'autres caractéristiques et avantages de la présente invention apparaîtront mieux à la lecture de la description qui suit en relation aux figures annexées suivantes :
[Fig 1] La figure 1, déjà décrite, représentant un procédé de distribution quantique de clé cryptographique par satellite selon l'art antérieur ;
[Fig 2] La figure 2, représentant un exemple de procédé centralisé d'appairage de clé cryptographique quantique par satellite selon l'invention.

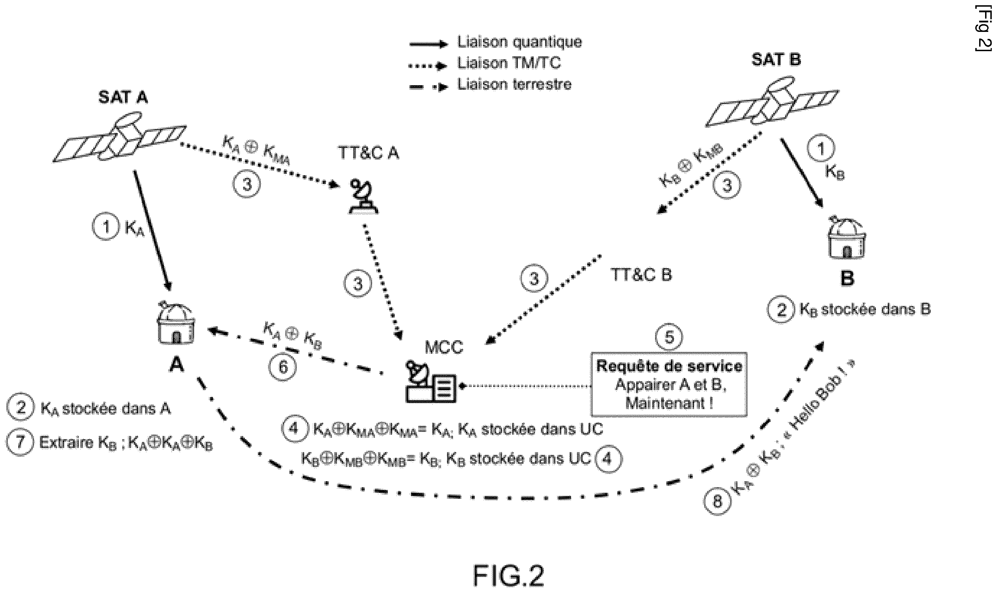

Les étapes d'un exemple de procédé selon l'invention vont être décrites en faisant référence à la figure 2. Le procédé permet un appairage par clé quantique entre deux stations au sol A, B. Le procédé peut s'appliquer à plus de deux stations au sol. Les stations au sol A, B comprennent notamment des moyens de communication vers un ou plusieurs satellites.

Dans une étape de distribution quantique de clés 1, pour chaque station au sol A, B, au moins une clé cryptographique K_{A}, K_{B}, dite « clé liée à la station au sol », est partagée par communication quantique entre la station au sol A, B et un satellite SAT A, SAT B, dit « satellite d'établissement de clé ». Ainsi, une communication quantique est établie entre une première station au sol A et un premier satellite d'établissement de clé SAT A. Une clé K_{A} liée à la première station au sol A est partagée entre la première station au sol A et le premier satellite d'établissement de clé SAT A à l'issue de cette communication quantique. Toujours dans cette étape de distribution quantique de clés 1, de manière similaire, une communication quantique est établie entre une deuxième station au sol B et un deuxième satellite d'établissement de clé SAT B. Une clé K_{B} liée à la deuxième station au sol B est partagée entre la deuxième station au sol B et le deuxième satellite d'établissement de clé SAT B par cette communication quantique.

A l'issue 2 de l'étape de distribution quantique de clés, la clé K_{A} liée à la première station au sol A se trouve partagée entre la première station au sol A et le premier satellite d'établissement de clé SAT A ; la clé K_{B} liée à la deuxième station au sol B se trouve partagée entre la deuxième station au sol B et le deuxième satellite d'établissement de clé SAT B. Autrement dit, chaque clé K_{A}, K_{B} liée à une station au sol A, B est stockée dans la station au sol A, B respective et dans le satellite d'établissement de clé SAT A, SAT B respectif.

Ensuite, dans une étape de stockage centralisé de clés 3, chaque clé K_{A}, K_{B}, liée à une station au sol A, B est transmise de manière chiffrée du satellite d'établissement de clé SAT A, SAT B vers une unité centrale de gestion de clés UC. L'unité centrale de gestion de clés UC stocke, notamment de façon sécurisée, les clés K_{A}, K_{B} liées aux stations au sol A, B. Autrement dit, le premier satellite d'établissement de clé SAT A envoie de façon chiffrée la clé K_{A} liée à la première station au sol A vers l'unité centrale de gestion de clés UC ; et le deuxième satellite d'établissement de clé SAT B envoie de façon chiffrée la clé K_{B} liée à la deuxième station au sol B vers l'unité centrale de gestion de clés UC. Ainsi, l'unité centrale de gestion de clés UC centralise toutes les clés K_{A}, K_{B} liées aux stations au sol A, B, préalablement partagées entre les stations au sol A, B et les satellites d'établissement de clé SAT A, SAT B lors de l'étape de distribution de clés 1. L'unité centrale de gestion de clés UC est terrestre, c'est-à-dire située au sol, ce qui la rend moins complexe à mettre en oeuvre et plus facilement accessible par rapport à un satellite.

A l'issue 4 de l'étape de stockage centralisé de clés 3, les clés K_{A}, K_{B} sont donc toutes enregistrées et disponibles dans l'unité centrale de gestion de clés UC, pour un appairage entre deux stations au sol A, B. Le satellite d'établissement de clé SAT A, SAT B peut supprimer la clé K_{A}, K_{B} liée à la station au sol A, B pour notamment libérer de l'emplacement mémoire à bord.

Une requête de service 5 à l'unité centrale UC initie une étape d'appairage 6 entre la première station au sol A et la deuxième station au sol B. Une telle requête de service 5 demande l'appairage de la première station au sol A avec la deuxième station au sol B, à savoir la mise à disposition d'une des clés K_{A}, K_{B} liées aux stations au sol devant communiquer entre elles.

Dans l'étape d'appairage 6, l'unité centrale de gestion de clés UC transmet alors de manière chiffrée la clé K_{B} liée à la deuxième station au sol B vers la première station au sol A.

A l'issue 7 de l'étape d'appairage 6, la clé K_{B} liée à la deuxième station au sol B est disponible dans la première station au sol A.

Puis, dans une étape de communication 8, la première station au sol A peut alors envoyer un message chiffré vers la deuxième station au sol B en utilisant la clé K_{B} liée à la deuxième station au sol B. Cependant, la première station au sol A et la deuxième station au sol B peuvent ne pas être les utilisateurs des clés K_{A}, K_{B}. Elles fournissent alors leur clé K_{A}, K_{B} à leur utilisateur respectif, notamment par une liaison terrestre. Les utilisateurs peuvent se connecter aux stations au sol A, B par un réseau de communication, local ou distant. De préférence, la liaison entre la station au sol A, B et l'utilisateur est chiffrée par une clé partagée par communication quantique. Cependant, la clé pourrait être partagée par d'autres moyens. Par exemple, la clé pourrait être définie lors de la conception de la station au sol A, B et de l'utilisateur. Par exemple, les utilisateurs peuvent être des satellites.

Grâce aux étapes de distribution quantique de clés et de stockage centralisé de celles-ci dans l'unité centrale de gestion de clés UC, lors d'une demande d'appairage postérieure, les clés sont immédiatement disponibles, notamment dans la limite des performances de liaisons terrestres par lesquelles transitent la demande d'appairage et la clé K_{B} liée à la deuxième station au sol B. Ainsi, une demande d'appairage urgente peut être satisfaite, ce qui n'était pas le cas dans l'art antérieur. Sa satisfaction n'est plus susceptible d'être retardée du fait de conditions météorologiques et/ou de survol défavorables au niveau des stations au sol. En effet, le procédé déporte ces incertitudes dans l'étape préalable de distribution de clés. Avantageusement, l'appairage demandé entre stations au sol peut être réalisé au plus tard, notamment lorsque le besoin d'une communication entre les stations au sol A, B se fait sentir. Il n'est pas besoin de prévoir un appairage longtemps à l'avance avec le risque que celui-ci soit inutile. Les avantages du procédé permettent de réduire les différences entre le fonctionnement des infrastructures terrestres QKD et celui des infrastructures QKD par satellite, facilitant ainsi l'intégration entre systèmes terrestres et satellitaires.

Notamment, les étapes de distribution de clés 1 et de stockage centralisé de clés 3 sont réalisées pour toutes les stations au sol A, B, avant toute étape d'appairage 6 entre stations au sol A, B.

En particulier, dans l'étape de stockage centralisé de clés 3, pour la transmission de la clé K_{A}, K_{B} liée à la station au sol A, B vers l'unité centrale UC, le satellite d'établissement de clé SAT A, SAT B utilise une clé K_{MA}, K_{MB} respective partagée entre le satellite d'établissement de clé SAT A, SAT B et l'unité centrale de gestion de clés UC.

Notamment, le satellite d'établissement de clé SAT A, SAT B réalise une fonction OU exclusif entre la clé K_{A}, K_{B} liée à la station au sol A, B et la clé K_{MA}, K_{MB} partagée entre le satellite d'établissement de clé SAT A, SAT B et l'unité centrale de gestion de clés UC. La séquence de parité KB⊕KMB obtenue est alors transmise à l'unité centrale de gestion de clés UC. A cet effet, l'unité centrale de gestion de clés UC peut mettre en oeuvre la technique de chiffrement par masque jetable (ou OTP pour « One Time Pad cryptography » en anglais). Ainsi, la liaison entre le satellite d'établissement de clé SAT A, SAT B et l'unité centrale de gestion de clés UC peut être mise en oeuvre par une liaison ouverte, notamment non quantique, par exemple par liaison optique ou radiofréquence RF.

En particulier, à l'issue 4 de l'étape de stockage centralisé de clés 3, l'unité centrale de gestion de clés UC extrait la clé K_{A}, K_{B} liée à la station au sol A, B à partir de la séquence de parité KA⊕KMA, KB⊕KMB émise par le satellite d'établissement de clé SAT A, SAT B. En particulier, si le niveau de sécurité s'en trouve augmenté, ce déchiffrement de la clé K_{A}, K_{B} liée à la station au sol A, B peut être effectué lors de la réception de la requête 5 de communication entre la première station au sol A et la deuxième station au sol B.

Notamment, la clé K_{MA}, K_{MB} partagée entre le satellite d'établissement de clé SAT A, SAT B et l'unité centrale de gestion de clés UC est partagée de manière quantique dans une première étape préalable de distribution quantique de clés de satellites. La première étape préalable de distribution quantique de clés de satellites est mise en oeuvre avant l'étape de stockage centralisé de clés 3, pour permettre une transmission chiffrée sûre des clés K_{A}, K_{B} liées aux stations au sol A, B vers l'unité centrale de gestion de clés UC. Ainsi, une première clé K_{MA} est partagée par communication quantique entre le premier satellite d'établissement de clé SAT A et l'unité centrale de gestion de clés UC ; et une deuxième clé K_{MB} est partagée par communication quantique entre le deuxième satellite d'établissement de clé SAT B et l'unité centrale de gestion de clés UC. De préférence, la première étape préalable de distribution quantique de clés est mise en oeuvre avant l'étape de distribution quantique 1 des clés liées aux stations au sol A, B, pour permettre une transmission des clés K_{A}, K_{B} liées aux stations au sol A, B aussitôt après leur partage entre la station au sol A, B et le satellite d'établissement de clé SAT A, SAT B.

Cependant, la clé K_{MA}, K_{MB} partagée entre le satellite d'établissement de clé SAT A, SAT B et l'unité centrale de gestion de clés UC pourrait être obtenue autrement, si le niveau de sécurité le permet. Par exemple, elle pourrait être définie lors de la conception du satellite d'établissement de clé SAT A, SAT B et embarquée avant son lancement.

En particulier, le premier satellite d'établissement de clé SAT A et le deuxième satellite d'établissement de clé SAT B peuvent correspondre à un même satellite parcourant une distance pour un partage de manière quantique de la clé K_{A} liée à la première station au sol A, puis de la clé K_{B} liée à la deuxième station au sol B, ou inversement. Alternativement, le premier satellite d'établissement de clé SAT A et le deuxième satellite d'établissement de clé SAT B peuvent correspondre à deux satellites différents, appartenant notamment à une constellation de satellites.

En particulier, lorsqu'une constellation de satellites est disponible, l'étape de distribution quantique de clés K_{A}, K_{B} liées aux stations au sol A, B, comprend pour chaque station au sol A, B, une sélection d'un satellite de la constellation en tant que satellite d'établissement de clé SAT A, SAT B, en fonction des conditions de communication avec la station au sol A, B. Le satellite d'établissement de clé SAT A, SAT B est notamment celui de la constellation de satellites ayant des conditions de communication avec la station au sol A, B les plus favorables, par exemple celui le plus proche de la station au sol A, B et/ou bénéficiant de conditions météorologiques se caractérisant par une couverture nuageuse la plus faible et/ou celui bénéficiant d'une transmission de nuit plutôt que de jour. L'emploi d'une constellation de satellites permet entre autres de multiplier les opportunités d'établir des communications quantiques avec les stations au sol A, B lorsque les conditions sont favorables.

Dans l'étape de stockage centralisé de clés 3, la transmission chiffrée des clés K_{A}, K_{B} liées aux stations au sol A, B utilise notamment l'infrastructure de la constellation de satellite. Par exemple, le satellite d'établissement de clé SAT A, SAT B transmet la clé K_{A}, K_{B} de manière chiffrée par une liaison ouverte vers une station de télémétrie, télécommande et contrôle ou TT&C (pour « Telemetry, Telecommand & Control » en anglais), bien qu'un autre chemin soit envisageable. La station TT&C est notamment une antenne relais pour la constellation de satellites connue en soi. La station TT&C relaie alors la transmission chiffrée de la clé K_{A}, K_{B} liée à la station au sol A, B vers un centre de contrôle de mission ou MCC (pour « Mission Control Center » en anglais). De manière connue en soi, le MCC a pour fonction la gestion de la constellation de satellites. Notamment, la transmission chiffrée de la clé K_{A}, K_{B} liée à la station au sol A, B s'effectue par une liaison TM/TC, c'est-à-dire une liaison de télémétrie-télécontrôle, en particulier sous forme d'une liaison radiofréquence.

La transmission chiffrée des clés K_{A}, K_{B} liées aux stations au sol A, B peut aussi utiliser des liaisons inter satellitaires. Un ou plusieurs satellites de la constellation peuvent servir de relai entre le satellite d'établissement de clé SAT A, SAT B et la station TT&C. La transmission peut alors être chiffrée de bout en bout et/ou être chiffrée de proche en proche. L'utilisation d'une clé ou plusieurs clés partagées par communication quantique est préféré.

Notamment, l'unité centrale de gestion de clés UC est comprise dans le centre de contrôle de mission. Ceci est particulièrement avantageux, car de par sa fonction de gestionnaire de la constellation de satellites, le centre de contrôle de mission est hautement sécurisé, aussi bien numériquement pour éviter toute infiltration informatique, que physiquement par du gardiennage, des autorisations d'accès différenciés, des coffres-forts par exemple. Le niveau de sécurité du centre de contrôle de mission est notamment compatible avec une fonction de noeud de confiance. L'unité centrale de gestion de clés UC peut alors bénéficier de ces moyens de sécurisation. L'unité centrale de gestion de clés UC est de préférence complètement comprise dans le centre de contrôle de mission. Alternativement, l'unité centrale de gestion de clés UC est partiellement comprise dans le centre de contrôle de mission ou totalement à l'extérieur du centre de contrôle de mission. La communication entre le centre de contrôle de mission et l'unité centrale de gestion de clés UC est alors de préférence hautement sécurisée, par exemple par une clé partagée par communication quantique.

L'unité centrale de gestion de clés UC peut être sur un seul site.

Alternativement, l'unité centrale de gestion de clés UC peut être distribuée sur plusieurs sites. Le cas échéant, dans l'étape de stockage centralisé de clés 3, chaque clé K_{A}, K_{B} liée à une station au sol A, B est transmise vers un site de l'unité centrale de gestion de clés UC. Notamment, un mécanisme de synchronisation est mis en oeuvre entre les sites de l'unité centrale de gestion de clés UC, afin de gérer la répartition des clés liées aux stations au sol A, B.

De préférence, le procédé comprend alors une deuxième étape préalable de distribution quantique de clés de sites, dans laquelle des clés sont partagées par communication quantique entre les sites de l'unité centrale de gestion de clés UC. La deuxième étape préalable de distribution quantique de clés de sites est mise en oeuvre avant l'étape de stockage de clés 3, pour permettre une transmission chiffrée sûre de la clé K_{A}, K_{B} liée à la station au sol A, B vers le site respectif de l'unité centrale UC. De préférence, la deuxième étape préalable de distribution quantique de clés est mise en oeuvre avant l'étape de distribution quantique 1 des clés liées aux stations au sol A, B, pour permettre une transmission des clés K_{A}, K_{B} liées aux stations au sol A, B aussitôt après leur partage entre la station au sol A, B et le satellite d'établissement de clé SAT A, SAT B.

Notamment, la première étape préalable de distribution quantique de clés de satellites et/ou la deuxième étape préalable de distribution quantique de clés de sites sont mises en oeuvre lors d'une configuration initiale du système mettant en oeuvre le procédé, en particulier avant toute étape de distribution quantique 1 de clés liées aux stations au sol A, B. Une telle configuration initiale peut avoir lieu lors d'une première mise en service du système ou après une mise à jour du système.

En particulier, dans l'étape d'appairage 6, la transmission chiffrée de la clé K_{B} liée à la deuxième station au sol B vers la première station au sol A comprend la transmission d'une séquence de parité KA⊕KB résultat de la fonction OU exclusif entre la clé K_{A} liée à la première station au sol A et la clé K_{B} liée à la deuxième station au sol B. A cet effet, l'unité centrale de gestion de clés UC peut mettre en oeuvre la technique de chiffrement par masque jetable (ou OTP pour « One Time Pad cryptography » en anglais). Il n'est donc pas nécessaire de définir une clé partagée entre chaque station au sol A, B et l'unité centrale de gestion de clés UC.

En particulier, à l'issue 7 de l'étape d'appairage 6, la première station au sol A extrait la clé K_{B} liée à la deuxième station au sol B à partir de la séquence de parité KA⊕KB émise par l'unité centrale de gestion de clés UC.

Puis, dans l'étape de communication 8, la première station au sol A peut alors envoyer une séquence de parité KA⊕KB résultat de la fonction OU exclusif entre la clé K_{A} liée à la première station au sol A et la clé K_{B} liée à la deuxième station au sol B, pour que la deuxième station au sol B possède elle aussi la clé K_{A} de la première station au sol A.

La clé K_{A} de la première station au sol A peut aussi être transmise de manière chiffrée à la deuxième station au sol B lors de l'étape d'appairage 6. A cet effet, l'unité centrale de gestion de clé UC envoie également la séquence de parité KA⊕KB vers la deuxième station au sol B, pour que cette dernière extrait la clé K_{A} liée à la première station au sol A, comme décrit en relation avec la première station au sol A.

En particulier, les liaisons entre les stations au sol A, B et l'unité centrale de gestion de clés UC sont terrestres, voire uniquement terrestres, c'est-à-dire implémentées par des infrastructures au sol, telles que par exemple des câbles de communication, des fibres optiques ou des systèmes de télécommunication mobile.

Le ou les satellites d'établissement de clé SAT A, SAT B et l'unité centrale de gestion de clé UC font donc partie d'un système centralisé d'appairage par clé cryptographique quantique pour une pluralité de stations au sol A, B.

Le ou les satellites d'établissement de clé SAT A, SAT B et/ou l'unité centrale de gestion de clé UC, en tant que noeuds de confiance dans l'échange de clé entre les stations au sol A, B, sont de préférence hautement sécurisés contre des attaques numériques et physiques par des moyens de protection appropriés, suivant les règles de l'art pour des infrastructures critiques. Ainsi, l'unité centrale de gestion de clés UC stocke de façon sécurisée les clés K_{A}, K_{B} liées aux stations au sol A, B. Le ou les satellites d'établissement de clé SAT A, SAT B peuvent transitoirement stocker de façon sécurisée les clés K_{A}, K_{B} liées aux stations au sol A, B.

Pour mener à bien l'étape 1 de distribution quantique de clés liées aux stations au sol A, B, le ou les satellites d'établissement de clé SAT A, SAT B et les stations au sol A, B sont de préférence chacun équipés de terminaux optiques quantiques. Par exemple, le terminal optique quantique du satellite d'établissement de clé SAT A, SAT B comprend une source photonique ; et le terminal optique quantique de la station au sol A, B comprend, entre autres, un analyseur de qubits et des détecteurs de photons uniques. L'unité centrale de gestion de clés UC peut également être munie d'un terminal optique quantique, pour pouvoir mettre en oeuvre la première étape préalable de distribution quantique de clés de satellites.

Une station au sol A, B peut être fixe ou mobile, comme par exemple un bateau ou un sous-marin.

Pour au moins une des stations au sol A, B, voire toutes, plusieurs clés liées à la station au sol peuvent être partagées par communication quantique entre la station au sol et le satellite d'établissement de clé, et stockées en parallèle dans l'unité centrale de gestion de clés UC. Ces clés sont notamment partagées entre la station au sol et le satellite d'établissement de clé, dans une même étape de distribution de clé 1 ou dans des étapes de distribution de clé 1 séparées dans le temps. Ainsi, plusieurs clés liées à la station au sol A, B peuvent être disponibles d'avance, ce qui améliore la réactivité du procédé lors de la réception d'une demande d'appairage. Ceci est particulièrement avantageux pour une station au sol qui est très sollicitée.

Il est préférable que pour chaque station au sol A, B au moins une quantité minimale de clé K_{A}, K_{B} soit disponible dans l'unité centrale UC à tout moment, ceci afin qu'une demande d'appairage concernant l'une quelconque des stations au sol A, B puisse être satisfaite immédiatement.

Par exemple, la communication quantique entre la station au sol A, B et le satellite d'établissement de clé SAT A, SAT B ou celle entre le satellite d'établissement de clé SAT A, SAT B et l'unité centrale de gestions de clé UC, ou encore toute autre communication quantique décrite en relation avec l'invention, mettent en oeuvre un procédé QKD connu en soi, par exemple avec un protocole Prepare and Measure, tel que le protocole BB84.

Par le partage d'une clé de manière quantique ou par communication quantique, on entend notamment l'établissement par communication quantique entre deux entités d'une clé cryptographique établie en exploitant des effets de la physique quantique, la clé cryptographique quantique se trouvant partagée entre les deux entités à l'issue de cette communication quantique. En particulier, la clé cryptographique est une séquence aléatoire de bits logiques 0 et 1 ; et elle n'est dite « quantique » que parce qu'elle est établie grâce à une communication quantique.

## Revendications

1. Procédé centralisé d'appairage de clé cryptographique quantique par satellite pour une pluralité de stations au sol (A, B), procédé comprenant dans cet ordre :
une étape de distribution quantique de clés (1), dans laquelle, pour chaque station au sol (A, B), au moins une clé cryptographique (K_{A}, K_{B}) respective, dite « clé liée à la station au sol », est partagée par communication quantique entre la station au sol (A, B) et un satellite (SAT A, SAT B), dit « satellite d'établissement de clé » ;
- une étape de stockage centralisé de clés (3), dans laquelle, chaque clé (K_{A}, K_{B}) liée à une station au sol (A, B) est d'abord transmise de manière cryptée du satellite d'établissement de clé (SAT A, SAT B) vers une unité centrale terrestre de gestion de clés (UC), puis stockée par cette unité centrale terrestre de gestion de clés (UC) ;
et
- une étape d'appairage (6) entre une première (A) et une deuxième (B) desdites stations au sol, dans laquelle, sur réception d'une requête (5) de communication entre la première station au sol (A) et la deuxième station au sol (B), l'unité centrale terrestre de gestion de clés (UC) transmet de manière cryptée la clé (K_{B}) liée à la deuxième station au sol (B) vers la première station au sol (A).

2. Procédé selon la revendication précédente, dans lequel :
dans l'étape d'appairage (6) entre la première station au sol (A) et la deuxième station au sol (B), l'unité centrale terrestre de gestion de clés (UC) transmet en outre de manière chiffrée la clé (K_{A}) liée à la première station au sol (A) vers la deuxième station au sol (B).

3. Procédé selon la revendication 1 ou 2, dans lequel, dans l'étape d'appairage (6), la transmission ou les transmissions chiffrées comprennent la transmission d'une séquence de parité KA⊕KB résultat d'une fonction OU exclusif XOR entre la clé (K_{A}) liée à la première station au sol (A) et la clé (K_{B}) liée à la deuxième station au sol (B).

4. Procédé selon l'une des revendications précédentes, dans lequel, dans l'étape de stockage centralisé de clés (3), chaque clé (K_{A}, K_{B}) liée à une station au sol (A, B) est transmise de manière chiffrée au moyen d'une clé (K_{MA}, K_{MB}) partagée entre le satellite d'établissement de clé (SAT A, SAT B) et l'unité centrale terrestre de gestion de clés (UC).

5. Procédé selon la revendication précédente, dans lequel, dans l'étape de stockage centralisé de clés (3), la transmission chiffrée de la clé (K_{A}, K_{B}) liée à la station au sol (A, B) entre le satellite d'établissement de clé (SAT A, SAT B) et l'unité centrale terrestre de gestion de clés (UC) comprend la transmission d'une séquence de parité (KA⊕KMA, KB⊕KMB )résultat d'une fonction OU exclusif XOR entre la clé (K_{A}, K_{B}) liée à la station au sol (A, B) et la clé partagée (K_{MA}, K_{MB}) entre le satellite d'établissement de clé (SAT A, SAT B) et l'unité centrale terrestre de gestion de clés (UC).

6. Procédé selon la revendication 4 ou 5, comprenant, avant l'étape de stockage centralisé de clés (3), une première étape préalable de distribution quantique de clés de satellites, dans laquelle la clé (K_{MA}, K_{MB}) partagée entre le satellite d'établissement de clé (SAT A, SAT B) et l'unité centrale terrestre de gestion de clés (UC) est partagée par communication quantique entre le satellite d'établissement de clé (SAT A, SAT B) et l'unité centrale terrestre de gestion de clés (UC).

7. Procédé selon l'une des revendications précédentes comprenant en outre, le satellite d'établissement de clé (SAT A, SAT B) appartenant à une constellation de satellites, une sélection d'un satellite parmi la constellation de satellites en tant que satellite de d'établissement de clé (SAT A, SAT B) à partir de conditions de communication avec la station au sol (A, B).

8. Procédé selon l'une des revendications précédentes, dans lequel l'unité centrale terrestre de gestion de clés (UC) est au moins en partie comprise dans un centre de contrôle de mission (MCC) du satellite d'établissement de clé (SAT A, SAT B) ou de la constellation de satellites.

9. Procédé selon l'une des revendications précédentes, dans lequel, pour au moins une station au sol (A, B), plusieurs clés (K_{A}, K_{B}) liées à la station au sol (A, B) partagées par communication quantique sont stockées dans l'unité centrale terrestre de gestion de clés (UC).

10. Système centralisé d'appairage de clé cryptographique quantique par satellite pour une pluralité de stations au sol (A, B), système comprenant au moins un satellite (SAT A, SAT B), dit « satellite d'établissement de clé », et au moins une unité centrale terrestre de gestion de clés (UC), configurés pour mettre en oeuvre un procédé selon l'une des revendications précédentes.
